# EUROPEAN PATENT APPLICATION

(11) **EP 2 814 244 A1**
(43) Date of publication of application: **17.12.2014**
(21) Application number: 13305790.1
(22) Date of filing: 11.06.2013
(51) Int. Cl.: H04N 7/15

(54) **A method and a system for improving communication quality of a video conference**

(71) Applicant: ALCATEL LUCENT, 92100 Boulogne-Billancourt (FR)
(72) Inventor: Helbert, Emmanuel, 67400 ILLKIRCH (FR)
(74) Representative: Loyer & Abello

(57) **Abstract**

The invention concerns a method for improving communication quality of video conference comprising:
- determining that a first attendee is speaking through a first video conference terminal (1a, 1b, 1c, 1d) based on an audio signal collected at the first video conference terminal (1a, 1b, 1c, 1d);
- analyzing a behavior of a second attendee connected through a second video conference terminal (1 a, 1b, 1 c, 1 d) while the first attendee is speaking through the first video conference terminal(1 a, 1 b, 1 c, 1 d) based on a diagnostic data;
- detecting that a communication quality issue arises as a function of the behavior analysis of the second attendee connected through the second video conference terminal (1 a, 1b, 1 c, 1 d) ;
- triggering a corrective action to improve the communication quality in response to detection of a communication quality issue.

## Description

### Field of the invention

The invention concerns the field of video conferencing.

More particularly, the invention relates to a system and method for improving communication quality of a video conference.

### Background

Video conferencing enables attendees located at different sites to simultaneously interact in real time via video and audio streams.

A frequent problem experienced with video conference is a lack of quality of video and/or audio communication since communication quality degradation may lead to loss of participant's attention and focus. Thus, video conference quality is a key factor as it guarantees efficiency and productivity of the conference.

However, detecting degradation of communication quality can be difficult since it may depend on the speaker, the conference room, the video conference terminals and the video conferencing system.

Some methods for diagnosing and troubleshooting quality communication issue during videoconferences are known. Such a method is, for example, disclosed in document US20120082304. US20120082304 discloses a method for improving audio quality on a conference network in which information about a current teleconference are correlated with information about past conferences in order to make an intelligent assessment as to the potential cause of a poor audio or other condition.

However, if this method analyses audio signals as such in order to detect an audio quality issue, it does not take into account human perception of the video conference quality so that some quality issues may be missed and/or an inappropriate corrective action may be undertaken.

### Summary

Various embodiments provide an enhanced method and system for improving communication quality of a videoconference.

In a first embodiment, a method for improving communication quality of video conference between a plurality of attendees connected through video conference terminals communicating over a communication network is provided. A video conference terminal comprises a camera for providing a video signal, a microphone for providing an audio signal, a video output device for displaying a video content, an audio output device for reproducing an audio content and an volume controller for generating an audio output device volume control signal to adjust level of the audio content reproduced by the audio output device. The method comprises:
- determining that a first attendee is speaking through a first video conference terminal based on an audio signal collected at the first video conference terminal;
- analyzing a behavior of a second attendee connected through a second video conference terminal while the first attendee is speaking through the first video conference terminal based on a diagnostic data selected in the group consisting of:
   ○ a video signal collected at the second video conference terminal;
   ○ an audio signal collected at the second video conference terminal;
   ○ an audio output device volume control signal generated by the volume controller of the second video conference terminal; and
   ○ a video content displayed on the video output device of the second video conference terminal;
- detecting that a communication quality issue arises as a function of the behavior analysis of the second attendee connected through the second video conference terminal ;
- triggering a corrective action to improve the communication quality in response to detection of a communication quality issue.

Thus, thanks to these features, the method for improving quality communication takes into account human perception of the communication such that quality issues are detected more accurately.

Such a method is especially advantageous while several attendees are connected through a same video conference terminal and located at variable distances from the microphone.

According to embodiments, such method comprises one or more of the features below:
- analyzing the behavior of the second attendee connected through the second video conference terminal comprises a diagnostic step selected in the group consisting of:
   ○ detecting behavior representative of an audio quality issue by analyzing the volume of the audio output device of the second video conference terminal and the audio output device volume control signal generated by the volume controller of the second video conference;
   ○ detecting noise in the conference room in which the second video conference terminal is located by analyzing the audio signal collected at the second video conference terminal;
   ○ determining that the attention of the second attendee is not focused on the video output device of the second video conference terminal by analyzing the video signal collected at the second video conference terminal; and
   ○ determining that the attention of the second attendee is not focused on the video conference by analyzing the video content which is displayed on the second video conference terminal.
- the method further comprises :
   ○ analyzing a behavior of a third attendee connected through a third video conference terminal while the first attendee is speaking through the first video conference terminal based on a diagnostic data selected in the group consisting of:
      ■ a video signal collected at the third video conference terminal;
      ■ an audio signal collected at the third video conference terminal;
      ■ an audio output device volume control signal generated by the volume controller of the third video conference terminal; and
      ■ a video content displayed on the video output device of the
         third video conference terminal;
      wherein detecting that a communication quality issue arises comprises comparing behaviors analysis of the second and the third attendee in order to detect that a communication quality issue arises.
- the corrective action is selected in the group consisting of:
   ○ broadcasting a low audio level warning signal on the first video conference terminal to warn the first attendee that he has to speak louder and/or closer to the microphone of the first video conference terminal;
   ○ processing the audio and/or the video signal collected at the first video conference terminal;
   ○ performing voice recognition on the audio signal collected at the first terminal to generate a text data representative of the first attendee's speech and displaying the said text data on a video output device of the second video conference terminal;
   ○ controlling the camera and/or the microphone of the first video conference terminal in order to improve quality of the audio and/or video signal; and
   ○ muting the audio signal of the second video conference terminal.
- the low audio level warning signal is a graphic displayed on the video output device of the first video terminal and representing a comparison of the level of the audio signal collected at the first video conference terminal with a reference audio level.
- the low audio level warning is a notification comprising a suggestion as to how the first attendee may improve the audio communication quality.
- controlling the camera of the first video conference terminal in order to improve quality of the video signal comprises zooming the camera on the first attendee.
- controlling the microphone of the first video conference terminal in order to improve quality of the audio signal comprises increasing the microphone sensitivity and/or moving the microphone towards the first attendee.
- the method comprises analyzing quality of the audio signal and/or the video signal collected at the first conference terminal, the step of detecting that a communication quality issue arises being further based on the quality analysis of the audio signal and/or the video signal collected at the first conference terminal.
- analyzing a quality of the audio signal collected at the first video conference terminal comprises comparing the level of the audio signal with a reference value.
- analyzing quality of the video signal collected at the first video conference terminal comprises evaluating clearness and/or contrast of the video signal.
- the communication quality issue detection comprises determining the issue origin based on the behavior analysis and wherein the corrective action to be triggered is chosen among a list of predefined corrective action depending on the determined issue origin.

In a second embodiment, a system for improving communication quality of a video conference between a plurality of attendees connected through video conference terminals communicating over a communication network is provided. The system comprises:
- a communication quality detection device arranged to :
   ○ determine that a first attendee is speaking through a first video conference terminal;
   ○ analyze the behavior of a second attendee connected through a second video conference terminal while the first attendee is speaking through the first video conference terminal based a diagnostic data selected in the group selected in the group consisting of:
      ■ a video signal collected at the second video conference terminal;
      ■ an audio signal collected at the second video conference terminal;
      ■ an audio output device volume control signal generated by the volume controller of the second video conference terminal; and
      ■ a video content displayed on the video output device of the second video conference terminal;
   ○ detect that a communication quality issue arises as a function of the behavior analysis of the second attendee connected through the second video conference terminal;
- a quality communication corrector device which is arranged to trigger a corrective action for improving the communication quality upon a communication quality issue has been detected.

In some embodiments, the communication quality detection device comprises:
- remote detection modules, each remote detection module being associated with its respective video conference terminal and being arranged to determine whether a attendee is speaking through its respective video conference terminal, analyze the behavior of the attendee connected through its respective video conference terminal and generate data representative of the behavior analysis;
- a centralized detection module which is arranged to detect that a communication quality issue arises based on data representative of the behavior analysis generated by the remote detection modules.

According to an embodiment, a video conference installation is provided. The video conference installation comprises:
- a plurality of video conference terminals each comprising a microphone for providing an audio signal, a video output device for displaying a video content, an audio output device for reproducing an audio content and an volume controller generating an audio output device volume control signal to adjust level of the audio content reproduced by the audio output device;
- a video conference application server; and
- a system for improving communication quality of a video conference as mentioned above.

According to an embodiment, at least some of the plurality of video conference terminals comprise a camera for providing a video signal.

Aspects of the invention are based on the idea of analysis human perception of communication quality to detect communication impairment. As a matter of fact, the invention does not only embed measurements and actions on audio and video signals but also analyses attendees' behavior. Aspects of the invention are based on the idea of applying a corrective action on the speaker behavior. Aspects of the invention are based on the idea of acting on the attendees' behavior by gaining attention from attendees, encouraging speaker to speak louder and/or closer to the microphone, helping speaker to speak louder, requesting silence, decrease tension in conversation, facilitating discussion.

### Brief description of the drawings

These and other aspects of the invention will be apparent from and elucidated with reference to the embodiments described hereinafter, by way of example, with reference to the drawings.
**Figure 1** is a schematic diagram of a video conference installation.
**Figure 2** is a schematic diagram illustrating a communication quality detection device and a communication quality corrector device associated with the video conference installation of figure 1.
**Figure 3** is a schematic diagram illustrating a remote detection module comprising a signal quality analyzer and a behavior analyzer.
**Figure 4** is a schematic diagram illustrating a remote quality communication corrector module and a signal processing module.

### Detailed description of the embodiments

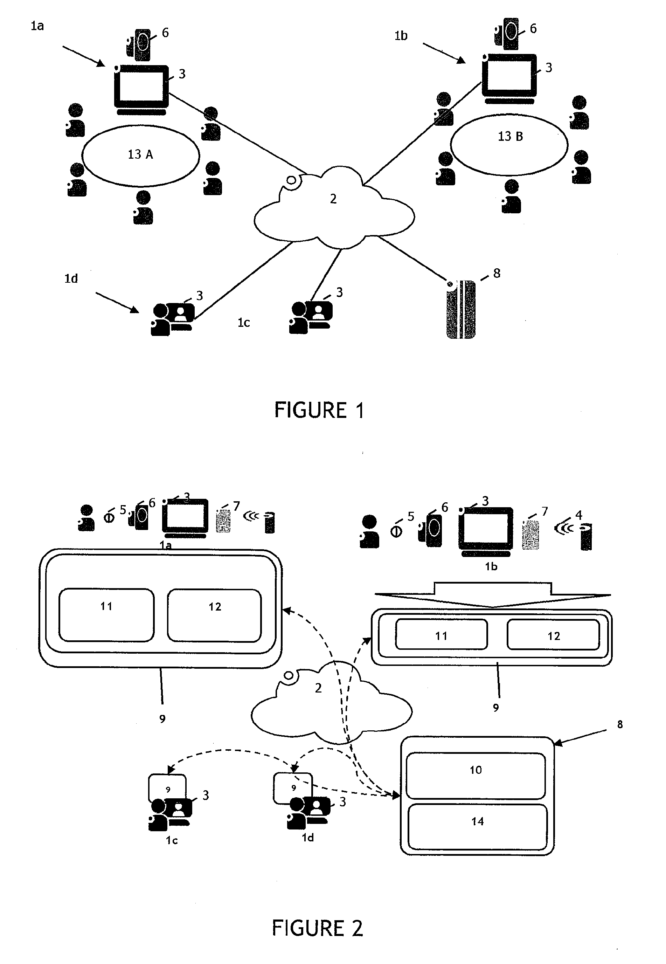

A video conference installation is shown in figures 1 and 2. In the illustrated example, the video conference connects four video conference terminals 1a, 1b, 1c, 1d over a communication network 2. The communication network 2 can be any conventional network suitable for transmitting video and audio streams, such as a local area network, a wide area network or the Internet.

Each of the video conference terminals 1a, 1b, 1c, 1d comprises a core with a microprocessor, a random access memory (RAM), a read-only memory (ROM) and several peripherals, such as a user interface, connected to the core.

The video conference terminals 1a, 1b, 1c, 1d comprise at least one video output device 3, such as a screen, a projector or a display, for displaying a video content and an audio output device 4, such as loudspeakers or headphones, for reproducing an audio content. The user interface includes a volume controller 5 for adjusting level of sound generated by the audio output device 4. To that end, the volume controller 5 generates an audio output device volume control signal. The volume controller 5 may be a physical switch as well as a virtual switch implemented by a software application. The user interface may also comprise a keyboard and a mouse. The video conference terminals 1a, 1b, 1c, 1d are provided with a camera 6 for capturing an image and providing a video signal and a microphone 7, through which voice is inputted, for providing an audio signal. According to an embodiment, one or several video conference terminals 1a, 1b, 1c, 1d may be involved in the video conference although it does not comprise any camera 6 for providing a video signal.

In the illustrated embodiment, two terminals 1a, 1b are multi-users terminals located in conference rooms 13a, 13b and the two others 1c, 1d are personal terminals. The video conference terminals 1a, 1b, 1c, 1d may be a video conference-dedicated terminal, a desktop computer, a laptop computer, a tablet computer, a smartphone or any other multi-media terminal.

A video conference application server 8 manages the video conference session. The video conference application server 8 comprises a conference bridge that connects the video conference terminals and establishes the links between the involved video conference terminals. Such a conference bridge receives audio and video signals from the involved video conference terminals 1a, 1b, 1c, 1d, performs the multiplexing of video and audio signals and transmits the multiplexed video and audio streams to the terminals 1a, 1b, 1c, 1d.

The system for improving communication quality comprises a communication quality detection device and a quality communication corrector device. The communication quality detection device is arranged to determine through which terminals 1a, 1b, 1c, 1d an attendee is speaking, to analyze the behavior of the attendees and to detect whether a communication quality issue arises based on the behavior analysis.

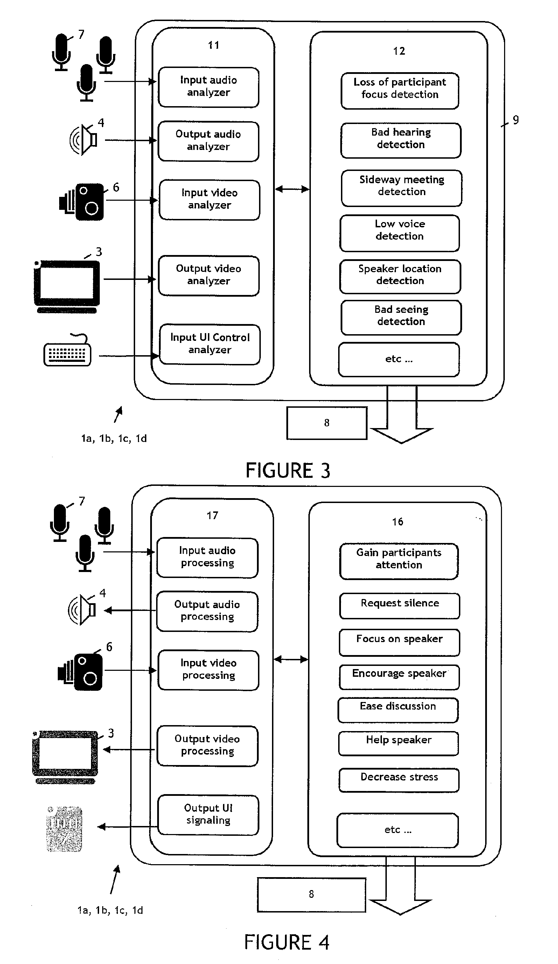

As shown in figure 2, the communication quality detection device comprises remote detection modules 9, each of them being associated with its respective video conference terminals 1a, 1b, 1c, 1d and a centralized detection module 10 associated with the video conference application server 8. As shown in figure 3, the remote detection modules 9 comprise a signal quality analyzer 11 and a behavior analyzer 12.

The signal quality analyzer 11 collects video and audio signal provided by the camera 6 and the microphone 7 of its respective video conference terminal 1a, 1b, 1c, 1d. Optionally, the signal quality analyzer 11 may also collect the video content displayed on the video output device 3, the audio output volume control signal provided by the volume controller 5 of the video conference terminal 1a, 1b, 1c, 1d and/or audio and/or video signals collected at the other video conference terminals 1a, 1b, 1c, 1d and transmitted by the video conference application server 8.

The signal quality analyzer 11 is arranged to detect whether an attendee is speaking through its associated video conference terminal 1a, 1b, 1c, 1d based on the audio signal provided by the microphone 7. To that end, the signal quality analyzer 11 can determine whether the audio signal is of a human voice type and/or measure the level of the audio signal in order to determine if the audio signal level is representative of a speech. Furthermore, according to an embodiment, the signal quality analyzer 11 is able to analyze audio signals transmitted by the video conference application server 8 and determine through which video conference terminal 1a, 1b, 1c, 1 an attendee is speaking. In that case, it means that audio signals transmitted by the video conference application server 8 are multi-channel signals.

The signal quality analyzer 11 may also perform one or several of the below-mentioned signal analysis.

While an attendee is speaking, the signal quality analyzer 11 compares the level of the audio signal provided by the microphone 7 with one or several reference values. Thus, the signal quality analyzer 11 is able to determine whether the level of the audio input signal is too low. According to an embodiment, the reference value of the audio input signal is determined based on one or several archived values which are stored in an historical data database and which correspond to the level of previous audio signals collected while an attendee was speaking. According to another embodiment, the reference value is a fixed threshold.

While an attendee is speaking through another video conference terminal 1a, 1b, 1c, 1d, the signal quality analyzer 11 also analyses the audio signal provided by the microphone 7 in order to detect whether there is noise in the conference room 13a, 13b.

The signal quality analyzer 11 evaluates the clearness and/or the contrast of the video signal provided by the camera 6 in order to determine whether quality of the video signal is insufficient due to bad contrast and/or fuzzy image.

The signal quality analyzer 11 analyzes the video signal provided by the camera 6 in order to determine whether the attention of the attendee is focused on the video output device 3 of the video conference terminal 1a, 1b, 1c, 1d. To that end, the signal quality analyzer 11 may use a head detection application or an application which analyzes the video signal in order to track attendee's head position and/or orientation. Such video signal analysis is only carried out by the signal quality analyzer 11 which are associated with a video conference terminals 1a, 1b, 1c, 1d having a camera 6.

The signal quality analyzer 11 also analyzes the audio output device volume control signal generated through the volume controller 5. It may be determined whether sound generated by the audio output device 4 has been muted and/or whether the volume controller 5 is operated.

The signal quality analyzer 11 analyzes the video content displayed on the video output device 3 and determines whether the video conference is displayed on the video output device 3.

The signal quality analyzer 11 also collects messages sent through instant messaging service, analyzes the textual content of the messages with an artificial intelligence module and determines whether the textual content is representative of a quality communication issue.

The behavior analyzer 12 analyzes the behavior of the attendee(s) connected through its respective terminal based on diagnostic data. Diagnostic data comprises signals collected by the signal quality analyzer 11 and/or signal quality analysis performed by the signal quality analyzer 11. Thus, the behavior analyzer 12 is able to detect that the behavior of one or several attendees connected through its respective video conference terminal 1a, 1b, 1c, 1d is representative of a quality communication issue.

Some behavior analysis will be described hereinafter by way of example.

The behavior analyzer 12 is able to detect that a hearing issue arises. According to an embodiment, such hearing issue is detected by analyzing the volume of the audio output device 4 and the audio output device volume control signal generated through the volume controller 5. By way of example, an attendee operating the volume controller 5 in order to increase the volume while the volume is already set to maximum is a behavior which is representative of an audio quality issue. An attendee who operates successively several times the volume controller 5 in order to increase the volume is also representative of an audio quality issue.

The behavior analyzer 12 is able to detect that the audio quality issue is due to the fact that an attendee is speaking too low or too far away from the microphone 7. This behavior is detected while the signal quality analyzer 11 determines that the level of the audio signal is too low.

The behavior analyzer 12 is arranged to detect loss of attention. According to an embodiment, a loss of attention is detected while the signal quality analyzer 11 detects that the attention of one or several attendees is not focused on the video output device 3 of the video conference terminal 1a, 1b, 1c, 1d. According to an embodiment, a loss of attention is detected while the signal quality analyzer 11 detects noise through its associated video conference terminal 1a, 1b, 1c, 1d as long as an attendee is speaking through another video conference terminal 1a, 1b, 1c,1d.

The remote detection modules 9 provide data regarding signal quality analysis and behavior analysis to the centralized detection module 10 which detects whether a communication quality issue arises based on data representative of the behavior analysis.

According to an embodiment, the communication between remote detection modules 9 and the centralized detection module 10 is carried out using a text protocol such as instant messaging. In that case, video conference terminals 1a, 1b, 1c, 1d have their own identifier in an instant messaging system and are thus able to transfer easily data regarding their local behavior analysis.

The centralized detection module 10 is in charge of processing data collected from the remote detection module 9 and calculating the probability of communication quality issue. Thus, the centralized detection module 10 acts as a filter to remove false detection. Furthermore, the centralized detection module 10 is arranged to identify the origin of the issue based on the behavior analysis and to locate it.

While the probability of communication quality issue is higher than a threshold, a quality communication corrector device 14 triggers a corrective action for improving communication quality. The corrective action to be triggered is chosen among a list of predefined corrective action depending on the determined issue origin.

Some corrective action that could be triggered by the quality communication corrector device 14 will be described hereinafter by way of example.

While a hearing issue has been identified and located in a video conference terminal 1a, 1b, 1c, 1d, the corrector device 14 requests a modification of the audio chain gain between the microphone 7 through which an attendee is speaking and the video conference terminal 1a, 1b, 1c, 1d for which a hearing issue has been identified.

According to an embodiment, while it has been detected an audio quality issue due to the fact that the speaker is speaking too low or too far away from the microphone 7, the corrector device 14 requests that a low audio level warning signal is broadcasted on the video conference terminals 1a, 1b, 1c, 1d through which an attendee is speaking. The low audio level warning signal may be a graphical warning which displays a comparison between the level of the audio signal collected and a target audio level representative of an adequate speaking level to reach or a textual notification comprising suggestion as to how the speaker may improve the audio communication quality. For example, the low audio level warning signal indicates that the communication quality has been qualified as bad or that the speaker has to speak louder, closer to the microphone 7 or may use headset.

According to another embodiment, upon detecting an audio quality issue, the corrector device 14 controls the microphone 7 through which an attendee is speaking in order to improve quality of the audio signal. To that end, the corrector device 14 requests an increase of the microphone sensitivity and/or a movement of the microphone 7 towards the attendee who is speaking.

According to an embodiment, upon detecting an audio quality issue, the corrector device 14 requests to perform a voice recognition on the audio signal collected at the microphone 7 through which an attendee is speaking, generate text data representative of the speech and multiplex text data with video signals in order to display it on the video output device 3 of the video conference terminals 1a, 1b, 1c, 1d. Text data may be displayed on the video output device 3 of all the involved video conference terminals 1a, 1b, 1c, 1d or only on the video conference terminal 1a, 1b, 1c, 1d for which a hearing issue has been identified.

According to an embodiment, upon detecting a loss of attention which could be imputable to a video quality issue, the corrector device 14 controls the camera 6 in order to improve quality of the video signal. For example, the corrector device 14 controls the camera 6 in order to zoom it on the attendee who is speaking.

According to an embodiment, if a loss of attention has been detected by noise detection, the corrector device 14 requests to mute the audio signal collected from the video conference terminal 1a, 1b, 1c, 1d where noise has been detected. A notification indicating that the audio signal has been muted in response to quality issue detection may be displayed on the video output device 3 of the video conference terminal 1a, 1b, 1c, 1d through which noise has been detected. The corrector device may 14 also suggest using instant messaging service to interact silently with other attendees.

According to an embodiment, the corrector device 14 comprises a voice guide module which is used to distribute speech between the attendees.

As shown in figure 4, the system may comprise remote quality communication corrector modules 15 associated with each video conference terminals 1a, 1b, 1c, 1d and connected over the network to the corrector device 14 associated with the conference application server 8. The communication corrector modules 15 comprise behavior helper 16 and a signal processing module 17 that are in charge of performing the corrective action triggered by the centralized corrector device 14. Thus, corrective actions are taken locally under control of the centralized corrector device 14.

In order to illustrate the system for improving communication quality of video conference, four scenarios are described hereinafter:

### Scenario 1

The remote detection module 9 of the first video conference terminal 1a detects that there is a speaker in its conference room 13a but that his voice level is quite low.

The remote detection module 9 of the second video conference terminal 1b detects that an attendee is speaking through the first video conference terminal 1a but that the voice level is low. Furthermore, the remote detection module 9 of the second video conference terminal 1b detects through an audio output device volume control signal analysis that an attendee operates several times the volume controller 5 of the second video conference terminal 1b in order to increase the audio output volume.

Moreover, the third video conference terminal 1c detects that the attendee, connected through it, is not focused on the video conference since it has muted the audio signal collected at the first video conference terminal 1a.

The centralized detection module 10 processes data collected from the remote detection modules 9 and calculates the probability of communication quality issue. As a function of this probability calculation, the centralized detection module 10 determines that there is a high risk of communication quality issue. The centralized detection module 10 determines that this communication quality issue is located in the conference room of the first video conference terminal 1a.

Then, the corrector device 14 determines the corrective action to be triggered depending on the identified issue origin. In the present case, the corrector device 14 requests the behavior helper 16 of the first conference terminal 1a to broadcast a low audio level warning signal indicating that the current speaker is badly heard in remote locations. The behavior helper 16 requests signal processing module 17 to process the video signal transmitted by the video conference application server 8 in order to display to the video output device 3 a graphical representation which shows the level of the audio signal and an indication of a level to reach which have been estimated based on historical data retrieved from previous video conference. Moreover, the behavior helper 16 controls the microphone 6 and moves it towards the speaker.

In the same time, the corrector device 14 broadcasts on the other video conference terminal 1b, 1c, 1d a warning signal informing the other attendees that some corrective actions to improve quality communication are being taken.

As a result of these corrective measures, the speaker starts speaking louder.

### Scenario 2

The attendee connected through the third video conference 1c has muted audio signals of the video conference since he is on the phone.

The remote detection module 9 of the third video conference terminals 1c detects that audio signals transmitted by the video conference application server 8 has been muted and reports this behavior analysis to the centralized detection module 10.

The centralized detection module 10 determines that the probability of communication quality issue is under a threshold to trigger a corrective action since no other video conference terminals 1b, 1c reports a behavior representative of a communication quality issue. Thus, the centralized detection module 10 considers that there is not a communication quality issue and no corrective action is triggered.

### Scenario 3

While an attendee is speaking through the first video conference terminal 1a, an attendee connected through the fourth video conference terminal 1d operates a dedicated channel to inform the centralized detection module 10 that there is an audio quality issue.

In response to this information, the centralized detection module 10 checks whether the remote detection module 9 of the other conference terminals 1b, 1c have detected a behavior representative of an audio quality issue.

If the audio quality issue relies only to the fourth video conference terminal 1d, the corrector device 4 triggers a corrective action in order to improve audio quality at the fourth video conference terminal side. To that end, the corrector device 4 may modify the audio chain gain between the microphone 7 of the first video conference terminal 1a and the fourth video conference terminal 1d.

If the corrector device 14 determines that the audio quality issue impacts the overall video conference since some other remote detection modules 9 have detected behaviors representative of an audio quality communication issue, the corrector device 14 determines that the quality issue is located in the conference room 13a of the first video conference terminal 1a and triggers corrective action such as explained in scenario 1.

### Scenario 4

While an attendee is speaking through the first video conference terminal 1a, the communication quality detection device detects that attendees connected through the second, third and fourth video conference terminals 1b, 1c, 1d have muted the audio signal collected at the first video conference terminal 1a. Moreover, noise has been detected in the conference room 13b by the remote detection module 9 associated with the second video conference terminal 1b. Thus, the centralized detection module 10 determines that the probability of communication quality issue is high and the corrector device 14 triggers appropriate corrective actions.

The corrector device 14 requests the signal processing module 17 of the second video conference terminal 1b through which noise has been detected to mute audio signal collected at the second video conference terminal 1b and to broadcast through the terminal 1b a warning indicating that the audio signal collected at the terminal 1b has been muted.

Furthermore, the corrector device 14 request the behavior helper 14 of the video conference terminal 1b, 1c, 1d to suggest subtitling the speech. The corrector device 14 may also trigger screen flashes in order to gain attention from the participants or generate a dashboard to record all questions participants may ask to the speaker regarding his speech.

The system for improving communication quality of video conference may be implemented by hardware, software or any combination thereof.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. Method for improving communication quality of video conference between a plurality of attendees connected through video conference terminals (1a, 1b, 1c, 1d) communicating over a communication network (2), a video conference terminal (1a, 1b, 1c, 1d) comprising a camera (6) for providing a video signal, a microphone (7) for providing an audio signal, a video output device (3) for displaying a video content, an audio output device (4) for reproducing an audio content and an volume controller (5) for generating an audio output device volume control signal to adjust level of the audio content reproduced by the audio output device (3); the method comprising :
- determining that a first attendee is speaking through a first video conference terminal (1a, 1b, 1c, 1d) based on an audio signal collected at the first video conference terminal (1a, 1b, 1c, 1d);
- analyzing a behavior of a second attendee connected through a second video conference terminal (1a, 1b, 1c, 1d) while the first attendee is speaking through the first video conference terminal (1a, 1b, 1c, 1d) based on a diagnostic data selected in the group consisting of:
○ a video signal collected at the second video conference terminal (1a, 1b, 1c, 1d);
○ an audio signal collected at the second video conference terminal (1a, 1b, 1c, 1d);
○ an audio output device volume control signal generated by the volume controller of the second video conference terminal (1a, 1b, 1c, 1d); and
○ a video content displayed on the video output device of the second video conference terminal (1a, 1b, 1c, 1d);
- detecting that a communication quality issue arises as a function of the behavior analysis of the second attendee connected through the second video conference terminal (1a, 1b, 1c, 1d);
- triggering a corrective action to improve the communication quality in response to detection of a communication quality issue.

2. Method according to claim 1, wherein analyzing the behavior of the second attendee connected through the second video conference terminal (1a, 1b, 1c, 1d) comprises a diagnostic step selected in the group consisting of:
- detecting behavior representative of an audio quality issue by analyzing the volume of the audio output device (4) of the second video conference terminal (1a, 1b, 1c, 1d) and the audio output device volume control signal generated by the volume controller (5) of the second video conference (1a, 1b, 1c, 1d);
- detecting noise in the conference room in which the second video conference terminal (1a, 1b, 1c, 1d) is located by analyzing the audio signal collected at the second video conference terminal (1a, 1b, 1c, 1d);
- determining that the attention of the second attendee is not focused on the video output device (3) of the second video conference terminal (1a, 1b, 1c, 1d) by analyzing the video signal collected at the second video conference terminal (1a, 1b, 1c, 1d); and
- determining that the attention of the second attendee is not focused on the video conference by analyzing the video content which is displayed on the second video conference terminal (1a, 1b, 1c, 1d).

3. Method according to claim 1 or 2, further comprising :
- analyzing a behavior of a third attendee connected through a third video conference terminal (1a, 1b, 1c, 1d) while the first attendee is speaking through the first video conference terminal (1a, 1b, 1c, 1d) based on a diagnostic data selected in the group selected in the group consisting of:
○ a video signal collected at the third video conference terminal (1a, 1b, 1c, 1d);
○ an audio signal collected at the third video conference terminal (1a, 1b, 1c, 1d);
○ an audio output device volume control signal generated by the volume controller (5) of the third video conference terminal (1a, 1b, 1c, 1d); and
○ a video content displayed on the video output device (3) of the third video conference terminal (1a, 1b, 1c, 1d);
wherein detecting that a communication quality issue arises comprises comparing behaviors analysis of the second and the third attendee in order to detect that a communication quality issue arises.

4. Method according to any one of claims 1 to 3, wherein the corrective action is selected in the group consisting of:
- broadcasting a low audio level warning signal on the first video conference terminal (1a, 1b, 1c, 1d) to warn the first attendee that he has to speak louder and/or closer to the microphone (7) of the first video conference terminal (1a, 1b, 1c,1d);
- processing the audio and/or the video signal collected at the first video conference terminal (1a, 1b, 1c, 1d);
- performing voice recognition on the audio signal collected at the first terminal (1a, 1b, 1c, 1d) to generate a text data representative of the first attendee's speech and displaying the said text data on a video output device (3) of the second video conference terminal (1a, 1b, 1c, 1d);
- controlling the camera (6) and/or the microphone (7) of the first video conference terminal (1a, 1b, 1c, 1d) in order to improve quality of the audio and/or video signal; and
- muting the audio signal of the second video conference terminal (1a, 1b, 1c, 1d).

5. Method according to claim 4, wherein the low audio level warning signal is a graphic displayed on the video output device (3) of the first video terminal (1a, 1b, 1c, 1d) and representing a comparison of the level of the audio signal collected at the first video conference terminal (1a, 1b, 1c, 1d) with a reference audio level.

6. Method according to claim 4 or 5, wherein the low audio level warning is a notification comprising a suggestion as to how the first attendee may improve the audio communication quality.

7. Method according to any one of claims 4 to 6, wherein controlling the camera (6) of the first video conference terminal (1a, 1b, 1c, 1d) in order to improve quality of the video signal comprises zooming the camera (6) on the first attendee.

8. Method according to any one of claims 4 to 7, wherein controlling the microphone (7) of the first video conference terminal (1a, 1b, 1c, 1d) in order to improve quality of the audio signal comprises increasing the microphone sensitivity and/or moving the microphone (7) towards the first attendee.

9. Method according to any one of claims 1 to 8, comprising analyzing a quality of the audio signal and/or the video signal collected at the first conference terminal (1a, 1b, 1c, 1d) and wherein the step of detecting that a communication quality issue arises is further based on the quality analysis of the audio signal and/or the video signal collected at the first conference terminal (1a, 1b, 1c,1d).

10. Method according to claim 9, wherein analyzing quality of the audio signal collected at the first video conference terminal (1a, 1b, 1c, 1d) comprises comparing the level of the audio signal with a reference value.

11. Method according to claim 9 or 10, wherein analyzing quality of the video signal collected at the first video conference terminal (1a, 1b, 1c, 1d) comprises evaluating clearness and/or contrast of the video signal.

12. Method according to any one of claims 1 to 11, wherein the communication quality issue detection comprises determining the issue origin based on the behavior analysis and wherein the corrective action to be triggered is chosen among a list of predefined corrective action depending on the determined issue origin.

13. System for improving communication quality of a video conference between a plurality of attendees connected through video conference terminals (1a, 1b, 1c, 1d) communicating over a communication network (2),a video conference terminal (1a, 1b, 1c, 1d) comprising a camera (6) for providing a video signal, a microphone (7) for providing an audio signal, a video output device (3) for displaying a video content, an audio output device (4) for reproducing an audio content and an volume controller (5) for generating an audio output device volume control signal to adjust level of the audio content reproduced by the audio output device (4); the system comprising :
- a communication quality detection device (9, 10) arranged to :
○ determine that a first attendee is speaking through a first video conference terminal (1a, 1b, 1c, 1d);
○ analyze the behavior of a second attendee connected through a second video conference terminal (1a, 1b, 1c, 1d) while the first attendee is speaking through the first video conference terminal (1a, 1b, 1c, 1d) based on a diagnostic data selected in the group selected in the group consisting of:
■ a video signal collected at the second video conference terminal (1a, 1b, 1c, 1d);
■ an audio signal collected at the second video conference terminal (1a, 1b, 1c, 1d);
■ an audio output device volume control signal generated by the volume controller (5) of the second video conference terminal (1a, 1b, 1c, 1d); and
■ a video content displayed on the video output device (3) of the second video conference terminal (1a, 1b, 1c, 1d);
○ detect that a communication quality issue arises as a function of the behavior analysis of the second attendee connected through the second video conference terminal (1a, 1b, 1c, 1d) ;
- a quality communication corrector device (14) which is arranged to trigger a corrective action for improving the communication quality upon a communication quality issue has been detected.

14. System according to claim 13, wherein the communication quality detection device comprises :
- remote detection modules (9), each remote detection module (9) being associated with its respective video conference terminal (1a, 1b, 1c, 1d) and being arranged to determine whether a attendee is speaking through its respective video conference terminal, analyze the behavior of the attendee connected through its respective video conference terminal and generate data representative of the behavior analysis;
- a centralized detection module (10) which is arranged to detect that a communication quality issue arises based on data representative of the behavior analysis generated by the remote detection modules (9).

15. A video conference installation comprising :
- a plurality of video conference terminals (1a, 1b, 1c, 1d) each comprising a microphone (7) for providing an audio signal, a video output device (3) for displaying a video content, an audio output device (4) for reproducing an audio content and an volume controller (5) generating an audio output device volume control signal to adjust level of the audio content reproduced by the audio output device (4), at least some of the plurality of video conference terminals comprising a camera (6) for providing a video signal;
- a video conference application server (8); and
- a system for improving communication quality of a video conference according to claim 13 or 14.

## Amended claims

### Amended claims in accordance with Rule 137(2) EPC.

1. Method for improving communication quality of video conference between a plurality of attendees connected through video conference terminals (1a, 1b, 1c, 1d) communicating over a communication network (2), a video conference terminal (1a, 1b, 1c, 1d) comprising a camera (6) for providing a video signal, a microphone (7) for providing an audio signal, a video output device (3) for displaying a video content, an audio output device (4) for reproducing an audio content and an volume controller (5) for generating an audio output device volume control signal to adjust level of the audio content reproduced by the audio output device (3); the method comprising :
- determining that a first attendee is speaking through a first video conference terminal (1a, 1b, 1c, 1d) based on an audio signal collected at the first video conference terminal (1a, 1b, 1c, 1d);
- analyzing a behavior of a second attendee connected through a second video conference terminal (1a, 1b, 1c, 1d) while the first attendee is speaking through the first video conference terminal (1a, 1b, 1c, 1d) based on a diagnostic data selected in the group consisting of:
∘ a video signal provided by the camera (6) of the second video conference terminal (1a, 1b, 1c, 1d) and collected at the second video conference terminal (1a, 1b, 1c, 1d);
∘ an audio signal provided by the microphone (7) of the second video conference terminal (1a, 1b, 1c, 1d) and collected at the second video conference terminal (1a, 1b, 1c, 1d);
∘ an audio output device volume control signal generated by the volume controller of the second video conference terminal (1a, 1b, 1c, 1d); and
∘ a video content displayed on the video output device of the second video conference terminal (1a, 1b, 1c, 1d);
- detecting that a communication quality issue arises as a function of the behavior analysis of the second attendee connected through the second video conference terminal (1a, 1b, 1c, 1d);
- triggering a corrective action to improve the communication quality in response to detection of a communication quality issue.

2. Method according to claim 1, wherein analyzing the behavior of the second attendee connected through the second video conference terminal (1a, 1b, 1 c, 1d) comprises a diagnostic step selected in the group consisting of:
- detecting behavior representative of an audio quality issue by analyzing the volume of the audio output device (4) of the second video conference terminal (1a, 1b, 1c, 1d) and the audio output device volume control signal generated by the volume controller (5) of the second video conference (1a, 1b, 1c, 1d);
- detecting noise in the conference room in which the second video conference terminal (1a, 1b, 1c, 1d) is located by analyzing the audio signal collected at the second video conference terminal (1a, 1b, 1c, 1d);
- determining that the attention of the second attendee is not focused on the video output device (3) of the second video conference terminal (1a, 1b, 1c, 1d) by analyzing the video signal collected at the second video conference terminal (1a, 1b, 1c, 1d); and
- determining that the attention of the second attendee is not focused on the video conference by analyzing the video content which is displayed on the second video conference terminal (1a, 1b, 1c, 1d).

3. Method according to claim 1 or 2, further comprising :
- analyzing a behavior of a third attendee connected through a third video conference terminal (1a, 1b, 1c, 1d) while the first attendee is speaking through the first video conference terminal (1a, 1b, 1c, 1d) based on a diagnostic data selected in the group selected in the group consisting of:
∘ a video signal collected at the third video conference terminal (1a, 1b, 1c, 1d);
∘ an audio signal collected at the third video conference terminal (1a, 1b, 1c, 1d);
∘ an audio output device volume control signal generated by the volume controller (5) of the third video conference terminal (1a, 1b, 1c, 1d); and
∘ a video content displayed on the video output device (3) of the third video conference terminal (1a, 1b, 1c, 1d); wherein detecting that a communication quality issue arises comprises comparing behaviors analysis of the second and the third attendee in order to detect that a communication quality issue arises.

4. Method according to any one of claims 1 to 3, wherein the corrective action is selected in the group consisting of:
- broadcasting a low audio level warning signal on the first video conference terminal (1a, 1b, 1c, 1d) to warn the first attendee that he has to speak louder and/or closer to the microphone (7) of the first video conference terminal (1a, 1b, 1c, 1d);
- processing the audio and/or the video signal collected at the first video conference terminal (1a, 1b, 1c, 1d);
- performing voice recognition on the audio signal collected at the first terminal (1a, 1b, 1c, 1d) to generate a text data representative of the first attendee's speech and displaying the said text data on a video output device (3) of the second video conference terminal (1a, 1b, 1c, 1d);
- controlling the camera (6) and/or the microphone (7) of the first video conference terminal (1a, 1b, 1c, 1d) in order to improve quality of the audio and/or video signal; and
- muting the audio signal of the second video conference terminal (1a, 1b, 1c, 1d).

5. Method according to claim 4, wherein the low audio level warning signal is a graphic displayed on the video output device (3) of the first video terminal (1a, 1b, 1c, 1d) and representing a comparison of the level of the audio signal collected at the first video conference terminal (1a, 1b, 1c, 1d) with a reference audio level.

6. Method according to claim 4 or 5, wherein the low audio level warning is a notification comprising a suggestion as to how the first attendee may improve the audio communication quality.

7. Method according to any one of claims 4 to 6, wherein controlling the camera (6) of the first video conference terminal (1a, 1b, 1c, 1d) in order to improve quality of the video signal comprises zooming the camera (6) on the first attendee.

8. Method according to any one of claims 4 to 7, wherein controlling the microphone (7) of the first video conference terminal (1a, 1b, 1c, 1d) in order to improve quality of the audio signal comprises increasing the microphone sensitivity and/or moving the microphone (7) towards the first attendee.

9. Method according to any one of claims 1 to 8, comprising analyzing a quality of the audio signal and/or the video signal collected at the first conference terminal (1a, 1b, 1c, 1d) and wherein the step of detecting that a communication quality issue arises is further based on the quality analysis of the audio signal and/or the video signal collected at the first conference terminal (1a, 1b, 1c, 1d).

10. Method according to claim 9, wherein analyzing quality of the audio signal collected at the first video conference terminal (1a, 1b, 1c, 1d) comprises comparing the level of the audio signal with a reference value.

11. Method according to claim 9 or 10, wherein analyzing quality of the video signal collected at the first video conference terminal (1a, 1b, 1c, 1d) comprises evaluating clearness and/or contrast of the video signal.

12. Method according to any one of claims 1 to 11, wherein the communication quality issue detection comprises determining the issue origin based on the behavior analysis and wherein the corrective action to be triggered is chosen among a list of predefined corrective action depending on the determined issue origin.

13. System for improving communication quality of a video conference between a plurality of attendees connected through video conference terminals (1a, 1b, 1c, 1d) communicating over a communication network (2),a video conference terminal (1a, 1b, 1c, 1d) comprising a camera (6) for providing a video signal, a microphone (7) for providing an audio signal, a video output device (3) for displaying a video content, an audio output device (4) for reproducing an audio content and an volume controller (5) for generating an audio output device volume control signal to adjust level of the audio content reproduced by the audio output device (4); the system comprising :
- a communication quality detection device (9, 10) arranged to :
∘ determine that a first attendee is speaking through a first video conference terminal (1a, 1b, 1c, 1d);
∘ analyze the behavior of a second attendee connected through a second video conference terminal (1a, 1b, 1c, 1d) while the first attendee is speaking through the first video conference terminal (1a, 1b, 1c, 1d) based on a diagnostic data selected in the group selected in the group consisting of:
▪ a video signal provided by the camera (6) of the second video conference terminal (1a, 1b, 1c, 1d) and collected at the second video conference terminal (1a, 1b, 1c, 1d);
▪ an audio signal provided by the microphone (7) of the second video conference terminal (1a, 1b, 1c, 1d) and collected at the second video conference terminal (1a, 1b, 1c, 1d);
▪ an audio output device volume control signal generated by the volume controller (5) of the second video conference terminal (1a, 1b, 1c, 1d); and
▪ a video content displayed on the video output device (3) of the second video conference terminal (1a, 1b, 1c, 1d);
∘ detect that a communication quality issue arises as a function of the behavior analysis of the second attendee connected through the second video conference terminal (1a, 1b, 1c, 1d) ;
- a quality communication corrector device (14) which is arranged to trigger a corrective action for improving the communication quality upon a communication quality issue has been detected.

14. System according to claim 13, wherein the communication quality detection device comprises :
- remote detection modules (9), each remote detection module (9) being associated with its respective video conference terminal (1a, 1b, 1c, 1d) and being arranged to determine whether a attendee is speaking through its respective video conference terminal, analyze the behavior of the attendee connected through its respective video conference terminal and generate data representative of the behavior analysis;
- a centralized detection module (10) which is arranged to detect that a communication quality issue arises based on data representative of the behavior analysis generated by the remote detection modules (9).

15. A video conference installation comprising :
- a plurality of video conference terminals (1a, 1b, 1c, 1d) each comprising a microphone (7) for providing an audio signal, a video output device (3) for displaying a video content, an audio output device (4) for reproducing an audio content and an volume controller (5) generating an audio output device volume control signal to adjust level of the audio content reproduced by the audio output device (4), at least some of the plurality of video conference terminals comprising a camera (6) for providing a video signal;
- a video conference application server (8); and
- a system for improving communication quality of a video conference according to claim 13 or 14.
